# EUROPÄISCHE PATENTSCHRIFT

(11) **EP 1 506 391 B1**
(45) Veröffentlichungstag und Bekanntmachung des Hinweises auf die Patenterteilung: **30.09.2009**
(21) Anmeldenummer: 03732227.8
(22) Anmeldetag: 12.05.2003
(51) Int. Cl.: G01N 27/407

(54) **SENSOR FÜR EINEN ELEKTROCHEMISCHEN MESSFÜHLER**
SENSOR FOR AN ELECTROCHEMICAL DETECTING ELEMENT
CAPTEUR POUR DISPOSITIF DE MESURE ELECTROCHIMIQUE

(30) Priorität: 14.05.2002 DE 10221382
(43) Veröffentlichungstag der Anmeldung: 16.02.2005
(73) Patentinhaber: ROBERT BOSCH GMBH, 70442 Stuttgart (DE)
(72) Erfinder: DIEHL, Lothar, 70839 Gerlingen (DE)
(86) Internationale Anmeldenummer: PCT/DE2003/001517
(87) Internationale Veröffentlichungsnummer: WO 2003/096004

(56) Entgegenhaltungen:
- EP-A- 1 014 083
- DE-A- 19 751 128
- DE-A- 19 815 700
- DE-A- 19 963 566
- DE-C- 3 833 541
- US-A- 5 447 618
- US-A1- 2002 008 024
- PATENT ABSTRACTS OF JAPAN vol. 2000, no. 09, 13. Oktober 2000 (2000-10-13) & JP 2000 180410 A (RIKEN CORP), 30. Juni 2000 (2000-06-30)

## Beschreibung

### Stand der Technik

Die Erfindung geht aus von einem Sensor für einen elektrochemischen Meßfühler zur Bestimmung des Sauerstoffgehalts in Gasen, insbesondere im Abgas von Brennkraftmaschinen, nach dem Oberbegriff des Anspruchs 1.

Bei einem bekannten Sensor dieser Art (DE 197 51 128 A1) ist der als mäanderförmiger, elektrischer Widerstandsleiter ausgebildete Heizer auf der von der Nernstzelle abgekehrten Oberfläche der Trägerschicht aufgedruckt und von einer ebenfalls aufgedruckten Abdeckschicht aus Aluminiumoxid (Al₂O₃) überdeckt. Abdeckschicht und Heizer sind gemeinsam mit der Trägerschicht "co-gefiret". Auf die die Nernstzelle aufnehmende Oberfläche der Trägerschicht ist eine poröse Haftschicht aufgesintert, auf die eine gasdichte Basisschicht aus yttriumstabilisiertem Zirkoniumoxid (ZrO₂) aufgedruckt ist. In aufeinanderfolgenden Druckschritten sind dann die Referenzelektrode samt ihrer Zuleitung und eine den Referenzkanal ergebende Opferschicht aufgedruckt. Anschließend sind Ionenleiter, der Festelektrolyt und die Außenelektrode mit Zuleitung aufgedruckt. Eine äußere, poröse Schutzschicht wird auf die Außenelektrode und eine gasdichte Abdeckung auf die Zuleitung zur Außenelektrode aufgedruckt.

Ein gattungsgemäßer Sensor ist auch aus der DE 3 833 541 bekannt, wobei der Referenzkanal porös gefüllt sein kann.

### Vorteile der Erfindung

Der erfindungsgemäße Sensor mit den Merkmalen des Anspruchs 1 die Elektroden in einfacher Weise jeweils eine doppelte Zuleitung mit entsprechend geringem Ohmschen Widerstand erhalten. Die Außen- und Referenzelektrode liegen nur um eine Druckschicht, nämlich dem Festelektrolyten, auseinander, und haben dadurch nahezu die gleiche Temperatur. Durch die untere Zuleitungsisolation auf dem ersten Träger, die auch den Bereich des später aufgedrucken Referenzkanals bedecken kann, kann die Nernstzelle gegen Störungseinkopplungen aus dem Heizer isoliert werden. In diesem Fall liegt der erste Träger auf der Masse des Sondengehäuses.

Durch die in den Ansprüchen 2-6 aufgeführten Maßnahmen sind vorteilhafte Weiterbildungen und Verbesserungen des im Anspruch 1 angegebenen Sensors möglich.

Das erfindungsgemäße Verfahren zur Herstellung des beschriebenen Sensors mit den Merkmalen des Anspruchs 7 hat den Vorteil, daß es sehr einfach und kostensparend durchgeführt werden kann und die Herstellung eines Sensors mit geringer Bauhöhe ermöglicht.

### Zeichnung

Die Erfindung ist anhand von in der Zeichnung dargestellten Ausführungsbeispielen in der nachfolgenden Beschreibung näher erläutert. Es zeigen in schematischer Darstellung:
- Fig. 1: einen Querschnitt eines Sensors für einen elektrochemischen Meßfühler nahe seines meßgasseitigen Endes gemäß Schnittlinie I - I in Fig. 4,
- Fig. 2: einen Querschnitt des Sensors nahe seines meßgasfernen Endes gemäß Schnittlinie II - II in Fig. 4,
- Fig. 3: eine schematische Draufsicht einzelner Funktionsschichten des Sensors in Fig. 1 ohne Heizer,
- Fig. 4: eine Draufsicht der aufeinanderliegenden, in Fig. 3 vier untersten Funktionsschichten,
- Fig. 5: eine gleiche Darstellung wie in Fig. 1 eines modifizierten Sensors.

### Beschreibung der Ausführungsbeispiele

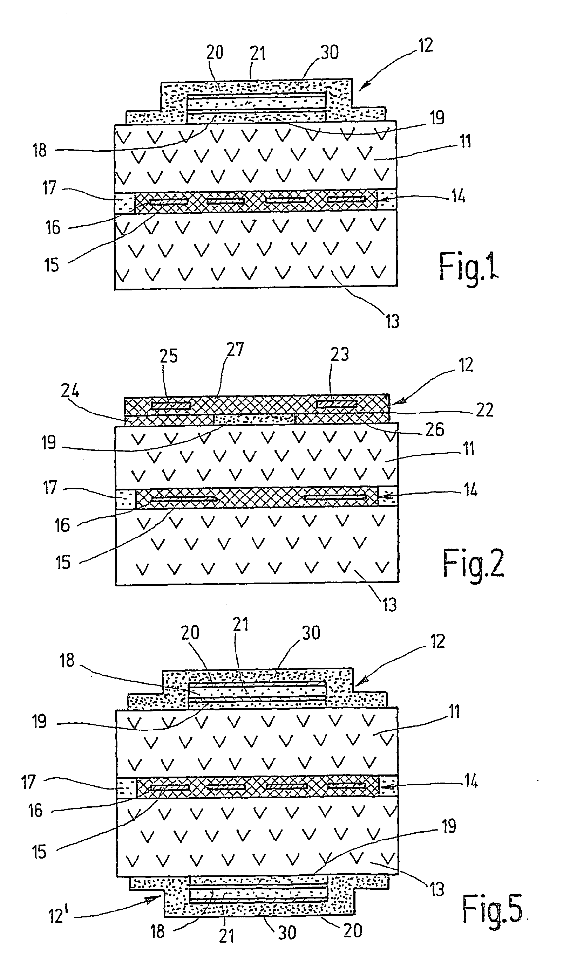

Der in Fig. 1 und Fig. 2 in zwei verschiedenen Schnittdarstellungen zu sehende Sensor für einen elektrochemischen Meßfühler zur Bestimmung der Sauerstoffkonzentration im Abgas von Brennkraftmaschinen, auch als planare Lambda-1-Sonde oder planare Sprungsonde bezeichnet, weist einen ersten Träger 11 aus yttriumstabilisiertem Zirkoniumoxid (ZrO₂), auf dem eine Nernstzelle 12 aufgebaut ist, und einen zweiten Träger 13 aus yttriumstabilisierten Zirkoniumoxid auf, auf dem ein elektrischer Heizer 14 aufgebaut ist. Die beiden Träger 11, 13 haben eine gleiche Dicke. Der Heizer 14 besteht aus einem mäanderförmigen, flachen Widerstandsleiter 15, der in eine Isolierung 16 aus Aluminiumoxid (Al₂O₃) eingebettet und an einer Heizspannung anschließbar ist. Widerstandsleiter 15 und Isolierung 16 sind beispielsweise auf die Oberfläche des zweiten Trägers 13 aufgedruckt. Die Isolierung 16 ist vorteilhaft von einem Dichtrahmen 17 aus einem Festelektrolyten 21 umschlossen. Der erste Träger 11 ist mit der Isolierung 16, z.B. mittels eines isolierenden und nichtionenleitenden Folienbinders, fest verbunden. Alternativ können die beiden Träger 11, 13 auch aus einem Aluminiumoxid (Al₂O₃) bestehen. In diesem kann die Isolierung 16 entfallen und der aus Aluminiumoxid bestehende Dichtrahmen umgibt den Widerstandsleiter 15.

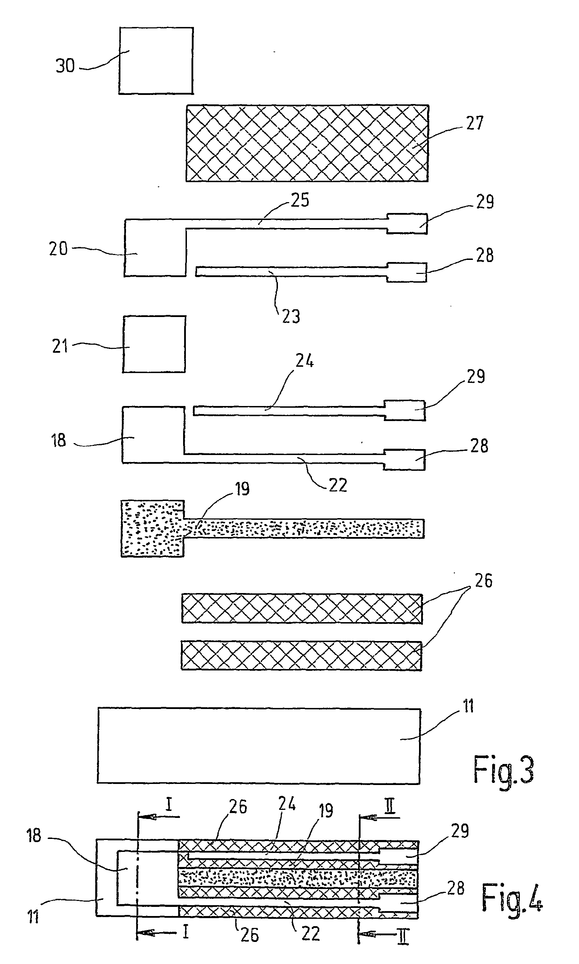

Die Nernstzelle 12 weist eine am meßgasseitigen Ende des Trägers 11 angeordnete Referenzelektrode 18, die über einen Referenzgaskanal 19 einem Referenzgas, üblicherweise Luft, ausgesetzt ist, sowie eine dem Meß- bzw. Abgas ausgesetzte Außenelektrode 20 auf. Referenzelektrode 18 und Außenelektrode 20 sind auf voneinander abgekehrten Seiten eines Festelektrolyten 21 angeordnet und mit als flache Leiterbahnen ausgebildeten, elektrischen Zuleitungen versehen. Der Referenzgaskanal 19 ist porös gefüllt, beispielsweise mit einem Aluminiumoxid, und verläuft mittig zwischen zwei Paaren von jeweils zwei unmittelbar aufeinanderliegenden Zuleitungen. Ein Paar aus einer ersten und einer zweiten Zuleitung 22, 23 ist der Referenzelektrode 18 zugehörig, und ein Paar aus einer ersten und einer zweiten Zuleitung 24, 25 ist der Außenelektrode 20 zugehörig. Die erste Zuleitung 22 der Referenzelektrode 18 und die erste Zuleitung 24 der Außenelektrode 20 verlaufen in der Ebene der Referenzelektrode 18, wobei die erste Zuleitung 22 einstückig mit der Referenzelektrode 18 verbunden ist. Die zweite Zuleitung 23 der Referenzelektrode 18 und die zweite Zuleitung 25 der Außenelektrode 20 liegen mit der Außenelektrode 20 in der gleichen Ebene, wobei die zweite Zuleitung 25 einstückig mit der Außenelektrode 20 verbunden ist. Jedes Paar von Zuleitungen 22, 23 bzw. 24, 25 ist von einer unteren Isolationsschicht 26 und einer oberen Isolationsschicht 27 abgedeckt, wobei die untere Isolationsschicht 26 unmittelbar auf der Oberfläche des ersten Trägers 11 angeordnet und im Bereich des Referenzgaskanals 19 ausgespart ist, während die obere Isolationsschicht 27 die zweiten Zuleitungen 22, 23 sowie den dazwischenliegenden Referenzkanal 19 überdeckt. Die in jedem Paar unmittelbar aufeinanderliegenden Zuleitungen 22, 23 bzw. 24, 25 sind am meßgasfernen Ende der ersten Trägerschicht 11 zu querschnittsgrößeren Anschlußkontakten 28, 29 geformt. Wie Fig. 2 zeigt, liegt die am meßgasseitigen Ende des Sensors ausgebildete Referenzelektrode 18 unmittelbar auf dem porös gefüllten Referenzgaskanal 19 auf. Zwischen der Referenzelektrode 18 und der Außenelektrode 20 ist der Festelektrolyt 21 angeordnet, und die Außenelektrode 20 ist mit einer gasdurchlässigen Schutzschicht 30 überdeckt. In Fig. 3 sind die vorstehend beschriebenen, einzelnen Funktionsschichten der Nernstzelle 12 in Draufsicht dargestellt. Diese Funktionsschichten liegen, beginnend mit dem ersten Träger 11 aufeinander auf. Der Träger 11 ist - wie auch der Träger 13 - als Keramikfolie ausgebildet, auf die die übrigen Funktionsschichten aufgedruckt sind.

Der so beschriebene Sensor wird wie folgt hergestellt, wobei auf Fig. 3 und die dort angegebenen Bezugszeichen verwiesen wird:
Auf die Trägerfolie 11 wird die untere Isolationsschicht 26, 27 aufgedruckt, wobei sie im Bereich des Referenzgaskanals 19 ausgespart wird. Alternativ kann die Isolationsschicht 26 aber auch den Bereich des Referenzgaskanals 19 überdecken. Danach wird der porös gefüllte Referenzgaskanal 19 gedruckt, wobei er vorzugsweise aus offenporösem Aluminiumoxid (Al₂O₃) hergestellt wird. Als nächste Funktionsschicht wird die Referenzelektrode 18 mit ihrer ersten Zuleitung 22 und die zweite Zuleitung 23 für die Außenelektrode 20 aufgedruckt und dabei die endseitigen Kontakte 28, 29 ausgebildet. Anschließend wird in mehreren dünnen Druckschichten der Festelektrolyt 21 aus mit Yttriumoxid (Y₂O₃) stabilisiertem Zirkoniumoxid (ZrO₂) aufgedruckt. Auf diesen folgt die Außenelektrode 20 mit ihrer zweiten Zuleitung 25, die deckungsgleich mit der ersten Zuleitung 24 liegt, und gleichzeitig wird die zweite Zuleitung 23 für die Referenzelektrode 18 mit aufgedruckt, die deckungsgleich auf der ersten Zuleitung 22 liegt. Danach wird die obere Isolationsschicht 27 aufgedruckt, die die zweiten Zuleitungen 23, 25 und den Referenzgaskanal 19 überdeckt. Das offenporöse Aluminiumoxid des Referenzgaskanals 19 gewährleistet dabei die optimale Verbindung mit der darüberliegenden geschlossenporösen Isolationsschicht 27, die ebenfalls aus Aluminiumoxid hergestellt ist. Zum Schluß wird auf die Außenelektrode 20 die gasdurchlässige Schutzschicht 30 aufgedruckt.

In Fig. 4 ist dargestellt, wie die in Fig. 3 unteren Funktionsschichten 11, 26, 19 sowie 18 mit 22 und 24 aufeinanderliegen. Die verbleibenden vier weiteren Funktionsschichten 20 mit 25 und 23, 27 sowie 30 in Fig. 3 werden in der dargestellten Geometrie übereinander gedruckt, so daß sich der in Fig. 1 und 2 im Querschnitt dargestellte Sensor ergibt. Das Drucken der einzelnen Funktionsschichten erfolgt vorzugsweise im Siebdruckverfahren.

Der beschriebene Aufbau des Sensors in Fig. 1 und 2 mit dem zentral im Sensor liegenden Heizer 14 läßt den Aufbau einer zweiten Nernstzelle 12' auf dem zweiten Träger 13 auf dessen von dem ersten Träger 11 abgekehrten Oberfläche zu, wie dies in Fig. 5 im Querschnitt dargestellt ist. Der Aufbau der Nernstzelle 12' entspricht dem vorstehend beschriebenen Aufbau der Nernstzelle 12, so daß gleiche Komponenten mit gleichen Bezugszeichen versehen sind. Anstelle einer Nernstzelle 12' kann auch eine Zelle mit einer anderen Empfindlichkeit, z.B. für Kohlenwasserstoffe, vorgesehen werden.

## Patentansprüche

1. Sensor für einen elektrochemischen Messfühler zur Bestimmung der Konzentration einer Gaskomponente in einem Messgas, insbesondere zur Bestimmung der Sauerstoffkonzentration im Abgas von Brennkraftmaschinen, mit einer auf der einen Seite eines Trägers (11) auf dessen Oberfläche aufgebauten Nernstzelle (12), die eine einem Referenzgas ausgesetzte Referenzelektrode (18) und eine dem Messgas ausgesetzte Außenelektrode (20) sowie einen Referenz- und Außenelektrode (18, 20) voneinander trennenden, ionenleitenden Festelektrolyten (21) aufweist, und mit einem auf der anderen Seite des Trägers (11) sich befindlichen elektrischen Heizer (14), wobei die Referenzelektrode (18) in einem porös gefüllten Referenzkanal (19) angeordnet ist, **dadurch gekennzeichnet, dass** der Referenzkanal (19) mittig zwischen zwei Paaren von jeweils zwei aufeinanderliegenden Zuleitungen (22, 23 bzw. 24, 25) verläuft, von denen jeweils ein Paar (22, 23) der Referenzelektrode (18) und ein Paar (24, 25) der Außenelektrode (20) zugehörig ist, dass von jedem Paar Zuleitungen (22, 23 bzw. 24, 25) die untere Zuleitung (22, 24) in einer Ebene mit der Referenzelektrode (18) und die obere Zuleitung (23, 25) in einer Ebene mit der Außenelektrode (20) liegt und dass jedes Paar Zuleitungen (22, 23 bzw. 24, 25) von einer unteren und oberen Isolationsschicht (26, 27) abgedeckt ist.

2. Sensor nach Anspruch 1, **dadurch gekennzeichnet, dass** die Außenelektrode (20) von einer gasdurchlässigen, porösen Schutzschicht (30) abgedeckt ist.

3. Sensor nach Anspruch 2, **dadurch gekennzeichnet, dass** die Schutzschicht (30) aus einem Aluminiumoxid besteht.

4. Sensor nach einem der Ansprüche 1 - 3, **dadurch gekennzeichnet, dass** der Referenzkanal (19) aus porösem Aluminiumoxid besteht.

5. Sensor nach einem der Ansprüche 1 - 4, **dadurch gekennzeichnet, dass** die Zuleitungen (22 - 25) als flache Leiterbahnen ausgebildet sind.

6. Sensor nach einem der Ansprüche 1 - 5, **dadurch gekennzeichnet, dass** die einzelnen Schichten, Elektroden und Zuleitungen auf dem Träger (11) übereinander aufgedruckt sind.

7. Verfahren zur Herstellung eines Sensors nach einem der Ansprüche 1- 6, wobei auf den Träger (11) die untere Isolationsschicht (26) aufgedruckt wird, danach der porös gefüllte Referenzgaskanal (19) mittig zur Isolationsschicht (26) und am messgasseitigen Ende über die untere Isolationsschicht (26) hinausgehend auf den Träger (11) aufgedruckt wird, anschließend die Referenzelektrode (18) mit ihrer ersten Zuleitung (22) und eine erste Zuleitung (24) für die Außenelektrode (20) so aufgedruckt werden, die Referenzelektrode (18) einem messgasseitigen vorderen Abschnitt des Referenzgaskanals (19) überdeckt und die beiden Zuleitungen (22, 24) auf der unteren Isolationsschicht (26) aufliegen, im Bereich der Referenzelektrode (18) in mehreren dünnen Druckschichten der Festelektrolyt (21) aufgedruckt wird, anschließend in einem gemeinsamen Druckvorgang die Außenelektrode (20) auf den Festelektrolyten (21) und die zweite Zuleitung (25) der Außenelektrode (20) auf deren erste Zuleitung (24) und die zweite Zuleitung (23) der Referenzelektrode (18) auf deren erste Zuleitung (22) aufgedruckt wird, und auf die beiden oberen Zuleitungen (23, 24) und den dazwischen liegenden Referenzgaskanal (19) eine obere Isolationsschicht (27) sowie auf die Außenelektrode (20) eine Schutzschicht (30) aufgedruckt wird.

8. Verfahren nach Anspruch 7, **dadurch gekennzeichnet, dass** das Drucken im Siebverfahren durchgeführt wird.

## Claims

1. Sensor for an electrochemical detecting element for determining the concentration of a gas component in a measurement gas, in particular for determining the oxygen concentration in the exhaust gas of internal combustion engines, having a Nernst cell (12), which is constructed on the surface of one side of a carrier (11) and has a reference electrode (18) which is exposed to a reference gas and an outer electrode (20) which is exposed to the measurement gas as well as an ion-conducting solid electrolyte (21) which separates the reference and outer electrodes (18, 20) from one another, and having an electrical heater (14) which is on the other side of the carrier (11), the reference electrode (18) being arranged in a porously filled reference channel (19), **characterized in that** the reference channel (19) runs centrally between two pairs of two respective supply lines (22, 23 and 24, 25) which lie on top of one another, one pair (22, 23) of which is associated with the reference electrode (18) and one pair (24, 25) of which is associated with the outer electrode (20), respectively, **in that** the lower supply line (22, 24) of each pair of supply lines (22, 23 and 24, 25) is in a plane with the reference electrode (18) and the upper supply line (23, 25) of each pair of supply lines (22, 23 and 24, 25) is in a plane with the outer electrode (20), and **in that** each pair of supply lines (22, 23 and 24, 25) is covered by a lower and an upper insulation layer (26, 27).

2. Sensor according to Claim 1, **characterized in that** the outer electrode (20) is covered by a gas-permeable porous protective layer (30).

3. Sensor according to Claim 2, **characterized in that** the protective layer (30) is composed of an aluminium oxide.

4. Sensor according to one of Claims 1-3, **characterized in that** the reference channel (19) is composed of porous aluminium oxide.

5. Sensor according to one of Claims 1-4, **characterized in that** the supply lines (22-25) are in the form of flat conductor tracks.

6. Sensor according to one of Claims 1-5, **characterized in that** the individual layers, electrodes and supply lines are printed on the carrier (11) above one another.

7. Method for producing a sensor according to one of Claims 1-6, the lower insulation layer (26) being printed onto the carrier (11), the porously filled reference gas channel (19) then being printed onto the carrier (11) centrally with respect to the insulation layer (26) and in such a manner that it goes beyond the lower insulation layer (26) at the end on the measurement gas side, the reference electrode (18) with its first supply line (22) and a first supply line (24) for the outer electrode (20) then being printed on in such a manner that the reference electrode (18) covers a front section of the reference gas channel (19) on the measurement gas side and the two supply lines (22, 24) rest on the lower insulation layer (26), the solid electrolyte (21) is printed on in a plurality of thin printed layers in the region of the reference electrode (18), the outer electrode (20) is then printed onto the solid electrolyte (21) and the second supply line (25) of the outer electrode (20) is printed onto the first supply line (24) of the latter and the second supply line (23) of the reference electrode (18) is printed onto the first supply line (22) of the latter in a common printing operation, and an upper insulation layer (27) is printed onto the two upper supply lines (23, 24) and the reference gas channel (19) between the latter, and a protective layer (30) is printed onto the outer electrode (20).

8. Method according to Claim 7, **characterized in that** the printing is carried out in a screen-printing method.

## Revendications

1. Détecteur pour sonde électrochimique de mesure destinée à déterminer la concentration d'un composant gazeux dans un gaz mesuré, en particulier pour déterminer la concentration en oxygène dans les gaz d'échappement de moteurs à combustion interne, et présentant
une cellule de Nernst (12) montée sur un côté de la surface d'un support (11) et qui présente une électrode de référence (18) exposée à un gaz de référence et une électrode extérieure (20) exposée au gaz à mesurer ainsi qu'un électrolyte solide (21) conducteur d'ions qui sépare l'une de l'autre l'électrode de référence et l'électrode extérieure (18, 20) et
un dispositif électrique de chauffage (14) situé sur l'autre côté du support (11),
l'électrode de référence (18) étant disposée dans un canal de référence (19) poreux et plein,
**caractérisé en ce que**
le canal de référence (19) s'étend au milieu entre deux paires de deux conducteurs (22, 23 et 24, 25) situés en face l'une de l'autre, dont une paire (22, 23) fait partie de l'électrode de référence (18) et une paire (24, 25) fait partie de l'électrode extérieure (20),
**en ce que** parmi les conducteurs (22, 23 et 24, 25) de chaque paire, le conducteur inférieur (22, 24) est situé dans le même plan que l'électrode de référence (18) et le conducteur supérieur (23, 25) est situé dans le même plan que l'électrode extérieure (20) et
**en ce que** chaque paire de conducteurs (22, 23 et 24, 25) est recouverte par une couche inférieure et une couche supérieure d'isolation (26, 27).

2. Détecteur selon la revendication 1, **caractérisé en ce que** l'électrode extérieure (20) est recouverte par une couche de protection (30) poreuse et perméable aux gaz.

3. Détecteur selon la revendication 2, **caractérisé en ce que** la couche de protection (30) est constituée d'un oxyde d'aluminium.

4. Détecteur selon l'une des revendications 1 à 3, **caractérisé en ce que** le canal de référence (19) est constitué d'oxyde d'aluminium poreux.

5. Procédé selon l'une des revendications 1 à 4, **caractérisé en ce que** les conducteurs (22-25) sont configurés comme pistes conductrices plates.

6. Détecteur selon l'une des revendications 1 à 5, **caractérisé en ce que** les différentes couches, les différentes électrodes et les différents conducteurs sont imprimés les uns au-dessus des autres sur le support (11).

7. Procédé de fabrication d'un détecteur selon l'une des revendications 1 à 6, dans lequel
la couche inférieure d'isolation (26) est imprimée sur le support (11),
ensuite, le canal de référence (19) plein et poreux est imprimé sur le support (11) au milieu de la couche d'isolation (26) et sur l'extrémité côté gaz à mesurer, partant de la couche inférieure d'isolation (26),
l'électrode de référence (18) avec son premier conducteur (22) et un premier conducteur (24) de l'électrode extérieure (20) sont imprimés de telle sorte que l'électrode de référence (18) recouvre une partie avant du côté gaz à mesurer du canal à gaz de référence (19) et les deux conducteurs (22, 24) sont appliqués sur la couche inférieure d'isolation (26),
l'électrolyte solide (21) est imprimé en plusieurs couches minces imprimées dans la zone occupée par l'électrode de référence (18),
ensuite, dans une opération d'impression commune, l'électrode extérieure (20) est imprimée sur l'électrolyte solide (21) et le deuxième conducteur (25) de l'électrode extérieure (20) est imprimé sur son premier conducteur (24), le deuxième conducteur (23) de l'électrode de référence (18) étant imprimé sur son premier conducteur (22), et
une couche supérieure d'isolation (27) est imprimée sur les deux conducteurs supérieurs (23, 24) et le canal à gaz de référence (19) situé entre eux et une couche de protection (30) est imprimée sur l'électrode extérieure (20).

8. Procédé selon la revendication 7, **caractérisé en ce que** l'impression est réalisée par sérigraphie.
